# EUROPÄISCHE PATENTSCHRIFT

(11) **EP 3 487 899 B1**
(45) Veröffentlichungstag und Bekanntmachung des Hinweises auf die Patenterteilung: **17.03.2021**
(21) Anmeldenummer: 17742742.4
(22) Anmeldetag: 21.07.2017
(51) Int. Cl.: C08G 18/48, C08G 18/75, C08G 18/76, C08G 18/12, C08G 18/28, C08G 18/30, C08G 18/32, C08K 9/04, C08K 9/06, C09J 175/04, C08K 3/00, C08K 3/04, C08K 5/00, C08K 5/521, C09D 175/08, C08K 3/22

(54) **FLAMMHEMMENDE KLEB- UND DICHTSTOFFE MIT VERBESSERTEN MECHANISCHEN EIGENSCHAFTEN**
FLAME RETARDANT ADHESIVE AND SEALANTS WITH IMPROVED MECHANICAL PROPERTIES
MATERIAU D'ETANCHEITE ET/OU ADHESIF IGNIFUGE AYANT DES PROPRIETES MECANIQUES AMELIOREES

(30) Priorität: 21.07.2016 EP 16180523
(43) Veröffentlichungstag der Anmeldung: 29.05.2019
(73) Patentinhaber: Sika Technology AG, 6340 Baar (CH)
(72) Erfinder: MENNECKE, Klaas, 79807 Lottstetten (DE); REIMANN, Sven, 8046 Zürich (CH); OERTLI, Marcel, 8408 Winthertur (CH)
(74) Vertreter: Sika Patent Attorneys
(86) Internationale Anmeldenummer: PCT/EP2017/068518
(87) Internationale Veröffentlichungsnummer: WO 2018/015552

(56) Entgegenhaltungen:
- EP-A1- 2 199 351
- DE-T2- 3 854 185

## Beschreibung

### Technisches Gebiet

Die Erfindung betrifft feuchtigkeitshärtende Zusammensetzungen mit flammhemmenden Eigenschaften und ihre Verwendung als Kleb- und Dichtstoffe sowie Beschichtungen.

### Stand der Technik

Feuchtigkeitshärtende Zusammensetzungen spielen eine bedeutende Rolle in vielen technischen Anwendungen, beispielsweise als einkomponentige Klebstoffe, Dichtstoffe oder Beschichtungen. Ihre Aushärtung wird durch Vernetzungsreaktionen bewirkt, welche unter Einfluss von Wasser über freie oder latente Reaktivgruppen wie beispielsweise Isocyanatgruppen oder Silangruppen ablaufen, wobei diese durch Kontakt mit Feuchtigkeit, hauptsächlich aus der Luft, mit sich selbst oder untereinander reagieren und so die in der Zusammensetzung enthaltenen Aufbaukomponenten kovalent zu einem polymeren Netzwerk verbinden.

Je nach Anwendungsbereich lässt sich auf dem Gebiet der feuchtigkeitshärtenden Zusammensetzungen eine sehr breite Palette an Produkten mit vielseitigen individuellen Eigenschaften formulieren. Dabei spielen vor allem Zusatzmittel eine grosse Rolle, wie beispielsweise Füllstoffe, Weichmacher, Additive und Haftvermittler, welche die Eigenschaften der Formulierung, wie beispielsweise Adhäsion, Mechanik und Verarbeitbarkeit wesentlich beeinflussen. So sind auch feuchtigkeitshärtende Zusammensetzungen bekannt, welche flammhemmende Eigenschaften und hohe thermische Stabilität besitzen und an Orten eingesetzt werden können, wo Brandhemmung wünschenswert oder sogar nötig ist, wie beispielsweise in Gebäuden, Transportmitteln, elektrischen Anlagen, Lagerräumen für leichtentzündliche Stoffe oder Rohrsystemen.

Traditionell werden vor allem Kleb- und Dichtstoffe sowie Beschichtungen auf Silikonbasis verwendet, da Silikone bekanntlich gute thermische Stabilität aufweisen und somit für Brandschutzanwendungen technisch geeignet sind.

Auf der anderen Seite zeigen Silikone generell vergleichsweise schlechte Adhäsion auf vielen Substraten und sie lassen sich nicht überstreichen und neigen zu permanenter Fleckenbildung durch Weichmacherauswanderung auf porösen Substraten.

Feuchtigkeitshärtende Zusammensetzungen auf Polyurethanbasis oder auf Basis silanmodifizierter Polymere sind zwar an sich thermisch weniger stabil als Silikone, sie weisen jedoch die obengenannten Nachteile nicht auf. Darüber hinaus lassen sie sich formulierungstechnisch wie erwähnt relativ vielseitig ausrüsten, um ihre flammhemmenden Eigenschaften zu verbessern und damit ähnlich positive Brandschutzeigenschaften zu erhalten wie Silikone.

Um eine Verbrennung zu verlangsamen oder gar vollständig zu unterbinden, werden aus diesem Grund üblicherweise Flammschutzmittel als Formulierungsbestandteil verwendet. Bekannt sind beispielsweise organische Flammschutzmittel, wie halogenhaltige, und aufgrund der geringeren Toxizität und Umweltbedenken vermehrt phosphorhaltige Substanzen, die unter Flammeneinwirkung eine intumeszierende Zwischenschicht bilden.

Die Anmeldung EP 1975217 beschreibt beispielsweise flammgeschützte Klebe- und Dichtmassen, die ein Mono- oder Diphosphinsäuresalz als Flammschutzmittel enthalten. Die Additivierung mit einem solchen Flammschutzmittel wirkt sich jedoch in der Regel nachteilig auf die Haftungseigenschaften einer Klebstoffformulierung aus. Die Verklebung insgesamt wird also durch die Verwendung eines additiven Flammschutzmittels erheblich geschwächt. Ein weiteres oft verwendetes Additiv auf Phosphorbasis ist Ammoniumpolyphosphat. Untersuchungen haben jedoch gezeigt, dass der Einsatz von Ammoniumpolyphosphat in einer Einkomponenten-Dichtmasse auf Polyurethanbasis zum völligen Verlust der Lagerstabilität einer solchen Masse führen kann.

Andere Intumeszenzmittel wirken sich ebenfalls oft nachteilig auf die mechanischen Eigenschaften der Zusammensetzungen aus. Die DE-A-38 13 251 beschreibt beispielsweise eine intumeszierende Einkomponenten-Brandschutzmasse auf Basis eines Polyurethan-Bindemittels und Blähgraphit als Intumeszenzmittel, wobei das Polyurethan-Bindemittel einen Restgehalt an freien Isocyanatgruppen aufweist. Solche Zusammensetzungen weisen jedoch beispielsweise eine stark verminderte Elastizität auf, was sie für eine Anwendung als Dichtstoffe einschränkt.

Eine weitere, oft genutzte Möglichkeit ist die Verwendung von Füllstoffen, welche unter Hitze Wasser abspalten. Bekanntestes Beispiel ist Aluminiumhydroxid, auch als Aluminiumtrihydrat (ATH) bezeichnet. Durch den üblicherweise hohen Gehalt an Restfeuchte jedoch eignen sich Füllstoffe dieser Art nur eingeschränkt für einkomponentige, feuchtigkeitshärtende Zusammensetzungen, da sie die feuchtigkeitshärtenden Zusammensetzungen bereits in den verschlossenen Gebinden teilweise ausreagieren lassen und somit keine genügende Lagerstabilität ermöglichen. Diesem Problem wurde mit vorgängigem Trocknen solcher Füllstoffe begegnet. So beschreibt beispielsweise EP 0 791 613 lagerstabile, einkomponentige Zusammensetzungen, deren Füllstoffe wie ATH vor der Formulierung mittels verschiedener Verfahren getrocknet werden. Allgemein zeigen solche feuchtigkeitshärtenden Zusammensetzungen die ATH oder andere wasserabspaltende mineralische Füllstoffe enthalten aber selbst nach dem Trocknen dieser Füllstoffe noch Nachteile. So ist bekannt, dass diese Füllstoffe zwar die Brandeigenschaften verbessern, aber dafür die Mechanik der ausgehärteten Zusammensetzungen, insbesondere Zugfestigkeit und Bruchdehnung, negativ beeinflussen.

Es besteht daher nach wie vor das Bedürfnis nach einer feuchtigkeitshärtenden Zusammensetzung, welche die oben erwähnten Nachteile des Standes der Technik nicht aufweist.

### Darstellung der Erfindung

Aufgabe der vorliegenden Erfindung ist es daher, eine feuchtigkeitshärtende Zusammensetzung bereitzustellen, welche ausgezeichnete flammhemmende Eigenschaften besitzt und nach Aushärtung bei hoher Hitze lange beständig bleibt, im Gebinde lagerstabil ist und nach der Aushärtung sehr gute mechanische Eigenschaften, insbesondere bezüglich Zugfestigkeit, Bruchdehnung und Zugscherfestigkeit, aufweist.

Diese Aufgabe wird durch eine feuchtigkeitshärtende Zusammensetzung wie in Anspruch 1 beschrieben auf überraschende Weise gelöst. Durch die Verwendung von gefälltem, oberflächenbeschichtetem Aluminiumtrihydrat (ATH) in ausreichender Menge in einer Zusammensetzung basierend auf feuchtigkeitsreaktiven Polymeren können überraschend Eigenschaften im Formulierungsprodukt erreicht werden, die mit herkömmlichem ATH nicht zugänglich sind. Weitere, optionale Bestandteile ermöglichen in besonderen Ausführungsformen neben den unerwarteten mechanischen Eigenschaften noch hervorragende Brandschutzeigenschaften, die zum Erreichen von strengen Brandschutznormklassen führen können.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine feuchtigkeitshärtende Zusammensetzung, umfassend
a) mindestens ein feuchtigkeitsreaktives Polymer **P** mit einem Anteil von 10 bis 50 Gew.-%, bezogen auf die gesamte Zusammensetzung,
b) mindestens ein gefälltes, oberflächenbeschichtetes Aluminiumtrihydrat **ATH,** mit einem Anteil von 30 bis 60 Gew.-%, bezogen auf die gesamte Zusammensetzung,
c) zwischen 5 und 25 Gew.-%, bezogen auf die gesamte Zusammensetzung, mindestens einer phosphorhaltigen Verbindung **PH,**
d) zwischen 0 und 20 Gew.-%, bezogen auf die gesamte Zusammensetzung, mindestens eines Kohlenstoffadditivs **KO,** wobei das Kohlenstoffadditiv **KO** ausgewählt ist aus der Gruppe bestehend aus Russen, insbesondere getrocknete Russen, sowie Blähgraphiten, welche eine intumeszierende Wirkung haben,
   dadurch gekennzeichnet, dass die phosphorhaltige Verbindung **PH** ausgewählt ist aus der Gruppe aromatische oder aliphatische Alkylphosphate, Ammoniumphosphat, Ammoniumpolyphosphat, roter Phosphor und Phosphorsäure.

Der Begriff "Silangruppe" bezeichnet eine an einen organischen Rest gebundene Silylgruppe mit einer bis drei, insbesondere zwei oder drei, hydrolysierbaren Substituenten am Silicium-Atom. Besonders gebräuchliche hydrolysierbare Substituenten sind Alkoxy-Reste. Diese Silangruppen werden auch als "Alkoxysilangruppen" bezeichnet. Silangruppen können auch in partiell oder vollständig hydrolysierter Form vorhanden sein.

Als "Hydroxysilan", "Isocyanatosilan", "Aminosilan" bzw. "Mercaptosilan" werden Organoalkoxysilane bezeichnet, die am organischen Rest zusätzlich zur Silangruppe eine oder mehrere Hydroxyl-, Isocyanato-, Amino- bzw. Mercaptogruppen aufweisen.

Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.

Der Begriff "organisches Polymer" umfasst ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde und im PolymerRückgrat mehrheitlich Kohlenstoffatome aufweist, sowie Umsetzungsprodukte eines solchen Kollektivs von Makromolekülen.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Silangruppen-haltige Polymere sind dabei insbesondere Silangruppen-haltige organische Polymere, welche üblicherweise und insbesondere in diesem Dokument gleichbedeutend auch als "silanfunktionelle Polymere", "silanmodifizierte Polymere" (SMP) oder "silanterminierte Polymere" (STP) bezeichnet werden. Ihre Vernetzung verläuft über die Kondensation von Silanolgruppen unter Ausbildung von Siloxanbindungen und wird klassischerweise mittels Organozinn-Verbindungen, wie insbesondere Di-alkylzinn(IV)-carboxylaten, katalysiert.

Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.

Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.

Eine gestrichelte Linie in den Formeln in diesem Dokument stellt jeweils die Bindung zwischen einem Substituenten und dem zugehörigen Molekülrest dar. Als "Raumtemperatur" wird eine Temperatur von ca. 23 °C bezeichnet.

Alle im Dokument erwähnten Industriestandards und Normen beziehen sich auf die zum Zeitpunkt der Einreichung der Erstanmeldung gültigen Fassung. Die Begriffe "Masse" und "Gewicht" werden in diesem Dokument synonym verwendet. So bezeichnet ein "Gewichtsprozent" (Gew.-%) einen prozentualen Massenanteil, der sich, falls nichts anderes erwähnt wird, auf die Masse (das Gewicht) der gesamten Zusammensetzung, bzw. je nach Zusammenhang des gesamten Moleküls, bezieht.

Als feuchtigkeitshärtende Zusammensetzung im Sinne dieser Erfindung ist insbesondere
- eine Polyurethan-Zusammensetzung, insbesondere ein zweikomponentiges, durch Reaktion von Polyolen mit Isocyanaten vernetzendes System, wie es beispielsweise für Klebstoffe, Beläge, Vergussmassen, Dichtfugen, Formkörper oder Blockschäume eingesetzt wird, oder ein einkomponentiges System mit blockierten (latenten) Isocyanatgruppen oder blockierten (latenten) Aminogruppen, wie es beispielsweise in Pulverlacken, Coil Coatings, Elektrotauchlacken oder Flüssiglacken eingesetzt wird; oder
- eine Zusammensetzung auf Basis von silanfuntionellen (Silangruppen-haltigen) Polymeren. Zusammensetzungen auf Basis von silanfunktionellen Polymeren härten auch bei relativ geringer Katalysator-Konzentration rasch aus und zeigen ein gutes Haftverhalten (Adhäsionsverhalten) auf vielen Substraten auch ohne den Einsatz von Primern. Sie sind ausserdem durch das Fehlen von Isocyanaten toxikologisch vorteilhaft.

Somit eignen sich als feuchtigkeitsreaktives Polymer **P** im Sinne dieser Erfindung bevorzugt Polyurethanpolymere **PU** mit freien oder latenten Isocyanaten sowie silanfunktionalle Polymere **STP.**

Die erfindungsgemässe Zusammensetzung enthält das mindestens eine feuchtigkeitsreaktive Polymer **P** mit einem Anteil von 10 bis 50 Gew.-%, bevorzugt 15 bis 30 Gew.-%, bezogen auf die gesamte Zusammensetzung.

In einer Ausführungsform umfasst das feuchtigkeitsreaktive Polymer **P** mindestens ein Polyurethanpolymer **PU** mit freien oder latenten Isocyanatgruppen. Als Isocyanatgruppen aufweisende Polyurethanpolymere **PU** zur Herstellung einer erfindungsgemässen Zusammensetzung eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.2 bis 3 Gew.-%, besonders bevorzugt 0.3 bis 2.5 Gew.-%, bezogen auf das gesamte Polymer, verbleibt.

Gegebenenfalls kann das Polyurethanpolymer **PU** unter Mitverwendung von Weichmachern hergestellt werden, wobei die verwendeten Weichmacher keine gegenüber Isocyanaten reaktive Gruppen enthalten.
Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.3:1 bis 4:1, insbesondere 1.5:1 bis 3:1 und besonders bevorzugt 1.7:1 bis 2.5:1 erhalten werden.

Geeignete Polyole für die Herstellung des Isocyanatgruppen aufweisenden Polyurethanpolymers sind insbesondere Polyetherpolyole, Styrol-Acrylnitrilgepfropfte Polyetherpolyole, Polyesterpolyole, Polycarbonatpolyole, Poly(meth)acrylatpolyole, polyhydroxyfunktionelle Fette und Öle oder Polykohlenwasserstoffpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol. Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butadien oder Diengemischen und Vinylmonomeren wie Styrol, Acrylnitril oder Isobutylen, oder polyhydroxyfunktionelle Polybutadienpolyole, beispielsweise solche, die durch Oxidation von Polybutadien oder Copolymerisation von 1,3-Butadien und Allylalkohol hergestellt werden und auch hydriert sein können.
Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro® CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 20'000 g/mol, und eine mittlere OH-Funktionalität im Bereich von 1.6 bis 3 auf.

Besonders geeignete Polyole sind Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.
Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate, wobei MDI und TDI besonders bevorzugt sind.

In der erfindungsgemässen Zusammensetzung ist das Isocyanatgruppen aufweisende Polyurethanpolymer **PU** bevorzugt in einer Menge von 10 Gew.-% bis 50 Gew.-%, insbesondere in einer Menge von 15 Gew.-% bis 30 Gew.-%, bezogen auf die gesamte Zusammensetzung, vorhanden.

In einkomponentigen Zusammensetzungen enthaltend das Isocyanatgruppen aufweisende Polyurethanpolymer **PU** kann es vorteilhaft sein, die Isocyanatgruppen zu blockieren und damit latent zu machen, um die Lagerstabilität durch Verhindern einer vorzeitigen Reaktion im Gebinde zu erhöhen.
Die Blockierung von Isocyanatgruppen zur Herstellung von blockierten oder latenten Isocyanatgruppen durch entsprechende Blockierungsmittel, die thermoreversibel mit Isocyanatgruppen reagieren können, ist auf dem Gebiet eine gängige Massnahme und der Fachmann kann sie ohne weiteres durchführen. Der Fachmann kennt eine breite Anzahl geeigneter Blockierungsmittel bzw. Blockierungsgruppen, z.B. aus den Übersichtsartikeln von Douglas A. Wick in Progress in Organic Coatings 36 (1999), 148-172 und in Progress in Organic Coatings 41 (2001), 1-83, worauf hiermit verwiesen wird.
Eine andere, zuweilen noch vorteilhaftere Methode zur Stabilisierung von einkomponentigen Polyurethanzusammensetzungen ist die Verwendung von latenten Härtern. Dabei handelt es sich um blockierte (latente) Polyamine, die unter Einfluss von z.B. Wasser ihre Blockierungsgruppe verlieren und zu freien Aminen reagieren, die dann in einer schnellen Reaktion mit den Isocyanaten unter Vernetzung reagieren.
Solche blockierten Amine als latente Härter sind dem Fachmann auch bestens bekannt und er findet im Stand der Technik viele Möglichkeiten, latente Amine herzustellen und zu verwenden. Beispielsweise werden sie in US 4,469,831, US 4,853,454 und US 5,087,661 sowie in EP 1772447 beschrieben, worauf hiermit verwiesen wird.

In einer weiteren Ausführungsform umfasst das feuchtigkeitsreaktive Polymer **P** mindestens ein silanfunktionelles Polymer **STP.**
Das silanfunktionelle Polymer **STP** ist bevorzugt ein Silangruppen-haltiges organisches Polymer, insbesondere ein Polyolefin, Polyester, Polyamid, Poly(meth)acrylat oder Polyether oder eine Mischform dieser Polymere, welches jeweils eine oder bevorzugt mehrere Silangruppen trägt. Die Silangruppen können seitlich in der Kette oder endständig stehen und sind über ein C-Atom an das organische Polymer gebunden.
Besonders bevorzugt ist das Silangruppen-haltige organische Polymer ein Silangruppen-haltiges Polyolefin oder ein Silangruppen-haltiger Polyester oder ein Silangruppen-haltiges Poly(meth)acrylat oder ein Silangruppen-haltiger Polyether oder eine Mischform dieser Polymere.
Am meisten bevorzugt ist das Silangruppen-haltige organische Polymer ein Silangruppen-haltiger Polyether.

Das Silangruppen-haltige organische Polymer weist als Silangruppen bevorzugt Alkoxysilangruppen auf, insbesondere Alkoxysilangruppen der Formel (I), 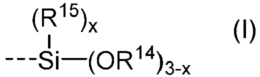 wobei
R¹⁴ für einen linearen oder verzweigten, einwertigen Kohlenwasserstoffrest mit 1 bis 5 C-Atomen, insbesondere für Methyl oder für Ethyl oder für Isopropyl, steht;
R¹⁵ für einen linearen oder verzweigten, einwertigen Kohlenwasserstoffrest mit 1 bis 8 C-Atomen, insbesondere für Methyl oder für Ethyl, steht; und
x für einen Wert von 0 oder 1 oder 2, bevorzugt für 0 oder 1, insbesondere für 0, steht.
Besonders bevorzugt steht R¹⁴ für Methyl oder für Ethyl.
Besonders bevorzugt sind Trimethoxysilangruppen, Dimethoxymethylsilangruppen oder Triethoxysilangruppen.
Dabei weisen Methoxysilangruppen den Vorteil auf, dass sie besonders reaktiv sind, und Ethoxysilangruppen weisen den Vorteil auf, dass sie toxikologisch vorteilhaft und besonders lagerstabil sind.

Das Silangruppen-haltige organische Polymer weist im Mittel bevorzugt 1.3 bis 4, insbesondere 1.5 bis 3, besonders bevorzugt 1.7 bis 2.8, Silangruppen pro Molekül auf. Die Silangruppen sind bevorzugt endständig.

Das Silangruppen-haltige organische Polymer **STP** weist bevorzugt ein mittleres Molekulargewicht im Bereich von 1'000 bis 30'000 g/mol, insbesondere von 2'000 bis 20'000 g/mol, auf. Das Silangruppen-haltige organische Polymer weist bevorzugt ein Silan-Equivalentgewicht von 300 bis 25'000 g/Eq, insbesondere von 500 bis 15'000 g/Eq, auf.

Das Silangruppen-haltige organische Polymer **STP** kann bei Raumtemperatur fest oder flüssig vorliegen. Bevorzugt ist es bei Raumtemperatur flüssig.

Meist bevorzugt handelt es sich beim Silangruppen-haltigen organischen Polymer **STP** um einen bei Raumtemperatur flüssigen Silangruppen-haltigen Polyether, wobei die Silangruppen insbesondere Dialkoxysilangruppen und/oder Trialkoxysilangruppen, besonders bevorzugt Trimethoxysilangruppen oder Triethoxysilangruppen, sind.

Verfahren zur Herstellung von Silangruppen-haltigen Polyethern sind dem Fachmann bekannt.
In einem bevorzugten Verfahren sind Silangruppen-haltige Polyether erhältlich aus der Umsetzung von Allylgruppen-haltigen Polyethern mit Hydrosilanen, gegebenenfalls unter Kettenverlängerung mit beispielsweise Diisocyanaten.
In einem weiteren bevorzugten Verfahren sind Silangruppen-haltige Polyether erhältlich aus der Copolymerisation von Alkylenoxiden und Epoxysilanen, gegebenenfalls unter Kettenverlängerung mit beispielsweise Diisocyanaten.
In einem weiteren bevorzugten Verfahren sind Silangruppen-haltige Polyether erhältlich aus der Umsetzung von Polyetherpolyolen mit Isocyanatosilanen, gegebenenfalls unter Kettenverlängerung mit Diisocyanaten.
In einem weiteren bevorzugten Verfahren sind Silangruppen-haltige Polyether erhältlich aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Silangruppen-haltige Polyether aus diesem Verfahren sind besonders bevorzugt. Dieses Verfahren ermöglicht den Einsatz einer Vielzahl von kommerziell gut verfügbaren, kostengünstigen Ausgangsmaterialien, womit unterschiedliche Polymereigenschaften erhalten werden können, beispielsweise eine hohe Dehnbarkeit, eine hohe Festigkeit, ein niedriges Elastizitätsmodul, ein tiefer Glasübergangspunkt oder eine hohe Witterungsbeständigkeit.

Besonders bevorzugt ist der Silangruppen-haltige Polyether erhältlich aus der Umsetzung von NCO-terminierten Urethan-Polyethern mit Aminosilanen oder Hydroxysilanen. Geeignete NCO-terminierte Urethan-Polyether sind erhältlich aus der Umsetzung von Polyetherpolyolen, insbesondere Polyoxyalkylendiolen oder Polyoxyalkylentriolen, bevorzugt Polyoxypropylendiolen oder Polyoxypropylentriolen, mit einer überstöchiometrischen Menge an Polyisocyanaten, insbesondere Diisocyanaten.
Bevorzugt wird die Umsetzung zwischen dem Polyisocyanat und dem Polyetherpolyol unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt.
Bevorzugte Diisocyanate sind ausgewählt aus der Gruppe bestehend aus 1,6-Hexamethylendiisocyanat (HDI), 1-Isocyanato-3,3,5-trimethyl-5-isocyanatomethyl-cyclohexan (Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden Silangruppen-haltige Polyether mit besonders guter Lichtechtheit erhalten.

Speziell geeignet als Polyetherpolyole sind Polyoxyalkylendiole oder Polyoxyalkylentriole mit einem Ungesättigtheitsgrad tiefer als 0.02 mEq/g, insbesondere tiefer als 0.01 mEq/g, und einem mittleren Molekulargewicht im Bereich von 400 bis 25'000 g/mol, insbesondere 1000 bis 20'000 g/mol.
Neben Polyetherpolyolen können anteilig auch andere Polyole eingesetzt werden, insbesondere Polyacrylatpolyole, sowie niedrigmolekulare Diole oder Triole.

Geeignete Aminosilane für die Umsetzung mit einem NCO-terminierten Urethan-Polyether sind primäre und sekundäre Aminosilane. Bevorzugt sind 3-Aminopropyltrimethoxysilan, 3-Aminopropyldimethoxymethylsilan, 4-Aminobutyltrimethoxysilan, 4-Amino-3-methylbutyltrimethoxysilan, 4-Amino-3,3-dimethylbutyltrimethoxysilan, N-Butyl-3-aminopropyltrimethoxysilan, N-Phenyl-3-aminopropyltrimethoxysilan, Addukte aus primären Aminosilanen wie 3-Aminopropyltrimethoxysilan, 3-Aminopropyldimethoxymethylsilan oder N-(2-Aminoethyl)-3-aminopropyltrimethoxysilan und Michael-Akzeptoren wie Acrylnitril, (Meth)acrylsäureestern, (Meth)acrylsäureamiden, Maleinsäure- oder Fumarsäurediestern, Citraconsäurediestern oder Itaconsäurediestern, insbesondere N-(3-Trimethoxysilylpropyl)aminobernsteinsäuredimethyl- oder -diethylester. Ebenfalls geeignet sind Analoga der genannten Aminosilane mit Ethoxy- oder Isopropoxygruppen anstelle der Methoxygruppen am Silicium.

Geeignete Hydroxysilane für die Umsetzung mit einem NCO-terminierten Urethan-Polyether sind insbesondere erhältlich aus der Addition von Aminosilanen an Lactone oder an cyclische Carbonate oder an Lactide.
Dafür geeignete Aminosilane sind insbesondere 3-Aminopropyltrimethoxysilan, 3-Aminopropyltriethoxysilan, 4-Aminobutyltrimethoxysilan, 4-Aminobutyltriethoxysilan, 4-Amino-3-methylbutyltrimethoxysilan, 4-Amino-3-methylbutyltriethoxysilan, 4-Amino-3,3-dimethylbutyltrimethoxysilan, 4-Amino-3,3-dimethylbutyltriethoxysilan, 2-Aminoethyltrimethoxysilan oder 2-Aminoethyltriethoxysilan. Besonders bevorzugt sind 3-Aminopropyltrimethoxysilan, 3-Aminopropyltriethoxysilan, 4-Amino-3,3-dimethylbutyltrimethoxysilan oder 4-Amino-3,3-dimethylbutyltriethoxysilan.
Als Lactone geeignet sind insbesondere γ-Valerolacton, γ-Octalacton, δ-Decalacton, und ε-Decalacton, insbesondere γ-Valerolacton.

Als cyclische Carbonate eignen sich insbesondere 4,5-Dimethyl-1,3-dioxolan-2-on, 4,4-Dimethyl-1,3-dioxolan-2-on, 4-Ethyl-1,3-dioxolan-2-on, 4-Methyl-1,3-dioxolan-2-on oder 4-(Phenoxymethyl)-1,3-dioxolan-2-on.
Als Lactide eignen sich insbesondere 1,4-Dioxan-2,5-dion (Lactid aus 2-Hydroxyessigsäure, auch "Glycolid" genannt), 3,6-Dimethyl-1,4-dioxan-2,5-dion (Lactid aus Milchsäure, auch "Lactid" genannt) und 3,6-Diphenyl-1,4-dioxan-2,5-dion (Lactid aus Mandelsäure).
Bevorzugte Hydroxysilane, welche auf diese Weise erhalten werden, sind N-(3-Triethoxysilylpropyl)-2-hydroxypropanamid, N-(3-Trimethoxysilylpropyl)-2-hydroxypropanamid, N-(3-Triethoxysilylpropyl)-4-hydroxypentanamid, N-(3-Triethoxysilylpropyl)-4-hydroxyoctanamid, N-(3-Triethoxysilylpropyl)-5-hydroxydecanamid und N-(3-Triethoxysilylpropyl)-2-hydroxypropylcarbamat.

Weiterhin sind geeignete Hydroxysilane auch erhältlich aus der Addition von Aminosilanen an Epoxide oder aus der Addition von Aminen an Epoxysilane. Bevorzugte Hydroxysilane, welche auf diese Weise erhalten werden, sind 2-Morpholino-4(5)-(2-trimethoxysilylethyl)cyclohexan-1-ol, 2-Morpholino-4(5)-(2-triethoxysilylethyl)cyclohexan-1-ol oder 1-Morpholino-3-(3-(triethoxysilyl)propoxy)propan-2-ol.

Als Silangruppen-haltige Polyether sind auch kommerziell erhältliche Produkte geeignet, insbesondere die Folgenden: MS Polymer™ (von Kaneka Corp.; insbesondere die Typen S203H, S303H, S227, S810, MA903 und S943); MS Polymer™ bzw. Silyl™ (von Kaneka Corp.; insbesondere die Typen SAT010, SAT030, SAT200, SAX350, SAX400, SAX725, MAX450, MAX951); Excestar® (von Asahi Glass Co. Ltd.; insbesondere die Typen S2410, S2420, S3430, S3630); SPUR+* (von Momentive Performance Materials; insbesondere die Typen 1010LM, 1015LM, 1050MM); Vorasil™ (von Dow Chemical Co.; insbesondere die Typen 602 und 604); Desmoseal® (von Bayer MaterialScience AG; insbesondere die Typen S XP 2458, S XP 2636, S XP 2749, S XP 2774 und S XP 2821), TEGOPAC® (von Evonik Industries AG; insbesondere die Typen Seal 100, Bond 150, Bond 250), Polymer ST (von Hanse Chemie AG/Evonik Industries AG, insbesondere die Typen 47, 48, 61, 61LV, 77, 80, 81); Geniosil® STP (von Wacker Chemie AG; insbesondere die Typen E10, E15, E30, E35).

Besonders bevorzugte Silangruppen-haltige organische Polymere weisen Endgruppen der Formel (II) auf, 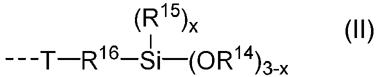 wobei
R¹⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht;
T für einen zweiwertigen Rest ausgewählt aus -O-, -S-, -N(R¹⁷)-, -O-CO-N(R¹⁷)-, -N(R¹⁷)-CO-O- und -N(R¹⁷)-CO-N(R¹⁷)- steht,
   wobei R¹⁷ für einen Wasserstoff-Rest oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilan-, Ether- oder Carbonsäureester-Gruppe aufweist, steht; und
R¹⁴, R¹⁵ und x die bereits genannten Bedeutungen aufweisen.
Bevorzugt steht R¹⁶ für 1,3-Propylen oder für 1,4-Butylen, wobei Butylen mit einer oder zwei Methylgruppen substituiert sein kann.
Besonders bevorzugt steht R¹⁶ für 1,3-Propylen.

In der erfindungsgemässen Zusammensetzung ist das silanfunktionelle Polymer **STP** bevorzugt in einer Menge von 10 Gew.-% bis 50 Gew.-%, insbesondere in einer Menge von 15 Gew.-% bis 30 Gew.-%, bezogen auf die gesamte Zusammensetzung, vorhanden.

Die erfindungsgemässe Zusammensetzung enthält mindestens ein gefälltes, oberflächenbeschichtetes Aluminiumtrihydrat **ATH,** mit einem Anteil von 30 bis 60 Gew.-%, bezogen auf die gesamte Zusammensetzung.

Aluminiumtrihydrat (ATH), auch γ-Al(OH)₃ genannt und bekannt als Mineral Gibbsit (Hydrargillit), ist ein dem Fachmann bekannter flammhemmender Zusatzstoff. Für die vorliegende Erfindung eignet sich jedoch nur gefälltes, oberflächenbeschichtetes ATH. Gängige gemahlene und/oder nicht oberflächenbeschichtete Typen führen nicht zur erfindungsgemässen technischen Wirkung. Als Beschichtung eignen sich insbesondere hydrophobierende organische Substanzen, die über ein geeignetes Verfahren physikalisch oder chemisch an der Oberfläche der ATH-Partikel aufgebracht werden. Solche Beschichtungsverfahren sind dem Fachmann bekannt und geeignet beschichtete ATH-Typen sind im Handel erhältlich. Besonders bevorzugt als Oberflächenbeschichtung für ATH sind Alkylalkoxysilane, insbesondere Alkyltrialkoxysilane, die über Hydrolyse und Kondensation eine zumindest teilweise hydrophobe Alkylsilikatschicht auf den Partikeln bilden. Ganz besonders bevorzugte Alkylalkoxysilane sind beispielsweise Vinylalkoxysilane, wie Vinyltrimethoxysilan.
Ebenfalls besonders bevorzugt sind Fettsäuren als Oberflächenbeschichtung. Diese bilden eine hydrophobe Hülle um die Partikel. Eine ganz besonders bevorzugte Fettsäure ist beispielsweise Stearinsäure.

Besonders geeignet sind beispielsweise gefälltes, Fettsäure-beschichtetes ATH, erhältlich unter dem Handelsnamen Martinal® OL 104 C, von Martinswerk, Deutschland, oder gefälltes, Vinylsilan-beschichtetes ATH, erhältlich unter dem Handelsnamen Martinal® OL 104 ZO, von Martinswerk, Deutschland. Die Oberflächenbeschichtung ist dabei vorzugsweise im Bereich von 0.01 Gew.-% bis 5 Gew.-% enthalten, bevorzugt im Bereich 0. 1 bis 1 Gew.-%, bezogen auf das Gewicht des Aluminiumtrihydrats **ATH.**

Die erfindungsgemässe Zusammensetzung enthält ausserdem zwischen 5 und 25 Gew.-%, bevorzugt zwischen 5 und 20 Gew.-%, besonders bevorzugt zwischen 8 und 15 Gew.-%, bezogen auf die gesamte Zusammensetzung, mindestens einer phosphorhaltigen Verbindung **PH,** wobei die phosphorhaltige Verbindung **PH** ausgewählt ist aus der Gruppe aromatische oder aliphatische Alkylphosphate, Ammoniumphosphat, Ammoniumpolyphosphat, roter Phosphor und Phosphorsäure.

Bevorzugte phosphorhaltige Verbindungen **PH** umfassen aromatische oder aliphatische Alkylphosphate, wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat), sowie Ammoniumphosphat, Ammoniumpolyphosphat, roter Phosphor und Phosphorsäure.

In besonders bevorzugten Ausführungsformen wird ein flüssiges Alkylphosphat verwendet, welches sich auch als Weichmacher eignet, insbesondere Tris-(2-Ethylhexyl)-phosphat, beispielsweise erhältlich unter dem Handelsnamen Disflamoll® TOF, von Lanxess.

Es ist selbstverständlich möglich und in gewissen Ausführungsformen vorteilhaft, verschiedene phosphorhaltige Verbindung **PH** als Mischung einzusetzen. Eine besonders vorteilhafte Mischung ist beispielsweise die gleichzeitige Verwendung von einem flüssigen Alkylphosphat, das zusätzlich als Weichmacher dient, mit einem Ammoniumpolyphosphat, das intumeszierend wirkt. So kann eine besonders hohe Brandschutzwirkung erzielt werden mit gleichzeitig verbesserten mechanischen Eigenschaften der Zusammensetzung, beispielsweise hinsichtlich Bruchdehnung.

Es kann vorteilhaft sein, der erfindungsgemässen Zusammensetzung weitere, dem Fachmann bekannte Flammschutzmittel und Brandhemmer beizufügen, wie beispielsweise Zinkborat, Melaminsalze und dergleichen.

In bevorzugten Ausführungsformen enthält die erfindungsgemässe Zusammensetzung zwischen 0 und 20 Gew.-%, bezogen auf die gesamte Zusammensetzung, mindestens eines Kohlenstoffadditivs **KO,** wobei das Kohlenstoffadditiv **KO** ausgewählt ist aus der Gruppe bestehend aus Russen, insbesondere getrocknete Russen, sowie Blähgraphiten, welche eine intumeszierende Wirkung haben

Als Kohlenstoffadditiv **KO** werden Substanzen bezeichnet, die ganz oder vorwiegend aus Kohlenstoff bestehen. Bevorzugt bestehen sie zu mindestens 80 Gew.-% aus Kohlenstoff, insbesondere zu mindestens 90 Gew.-%, besonders bevorzugt zu mindestens 95 Gew.-%, bezogen auf das Gewicht des Kohlenstoffadditivs **KO.** Als Kohlenstoffadditiv **KO** eignen sich Russe, insbesondere getrocknete Russe, sowie Blähgraphite, welche eine intumeszierende Wirkung haben. Geeignet als getrockneter Russ sind alle gängigen Industrierusse (carbon black), wie beispielsweise Monarch® 570, erhältlich von Cabot. Als Blähgraphit sind ebenfalls alle kommerziell erhältlichen Typen geeignet, wie beispielsweise Nyagraph® 250, erhältlich von Nyacol Nano Technlogies oder die Blähgraphite von Asbury Carbons.

In einer bevorzugten Ausführungsform enthält die feuchtigkeitshärtende Zusammensetzung als Kohlenstoffadditiv **KO** mindestens einen Blähgraphit, mit einem Anteil von zwischen 1 und 15 Gew.-%, bevorzugt zwischen 4 und 11 Gew.-%, bezogen auf die gesamte Zusammensetzung.

In einer besonders bevorzugten Ausführungsform enthält die feuchtigkeitshärtende Zusammensetzung als Kohlenstoffvadditiv **KO** 3 bis 10 Gew.-% Blähgraphit sowie 10 bis 25 Gew.-% einer obengenannten phosphorhaltigen Verbindung **PH,** immer bezüglich der gesamten Zusammensetzung. Solch eine Zusammensetzung kann nach Aushärtung die Brandschutzklasse B (s2, d0), bevorzugt B (s1, d0), nach DIN EN 13501-1 erreichen.

In einer anderen bevorzugten Ausführungsform enthält die feuchtigkeitshärtende Zusammensetzung als Kohlenstoffadditiv **KO** mindestens einen getrockneten Russ, mit einem Anteil von zwischen 1 und 15 Gew.-%, bevorzugt zwischen 4 und 11 Gew.-%, bezogen auf die gesamte Zusammensetzung.

In einer anderen besonders bevorzugten Ausführungsform enthält die feuchtigkeitshärtende Zusammensetzung als Kohlenstoffadditiv **KO** 4 bis 11

Gew.-% getrockneten Russ sowie 7 bis 15 Gew.-% phosphorhaltige Verbindung **PH,** immer bezüglich der gesamten Zusammensetzung. Solch eine Zusammensetzung kann nach Aushärtung mindestens die Gefährdungsstufenklasse HL2 nach DIN EN 45545-2 erreichen.
In noch bevorzugteren Ausführungsformen dieser ebengenannten Ausführungsform kann die Zusammensetzung nach Aushärtung die Gefährdungsstufenklasse HL3 nach DIN EN 45545-2 erreichen.

Ein weiterer Aspekt der Erfindung ist die Verwendung eines gefällten, oberflächenbeschichteten Aluminiumtrihydrats **ATH** in Kombination mit einem getrockneten Russ und einer phosphorhaltigen Verbindung **PH** zur Herstellung einer feuchtigkeitshärtenden Zusammensetzung, die nach Aushärtung mindestens die Gefährdungsstufenklasse HL2 nach DIN EN 45545-2 erreicht.

Ein weiterer Aspekt der Erfindung ist die Verwendung Verwendung eines gefällten, oberflächenbeschichteten Aluminiumtrihydrats **ATH** in Kombination mit einem Blähgraphit und einer phosphorhaltigen Verbindung **PH** zur Herstellung einer feuchtigkeitshärtenden Zusammensetzung, die nach Aushärtung die Brandschutzklasse B (s2, d0), bevorzugt B (s1, d0), nach DIN EN 13501-1 erreicht.

Die Zusammensetzung enthält bevorzugt mindestens einen Katalysator für die Vernetzung der feuchtigkeitsvernetzenden Polymere **P,** insbesondere für die Vernetzung von Silangruppen und/oder für die Vernetzung von Isocyanatgruppen mit Aminen oder Alkoholen. Als Katalysatoren geeignet sind insbesondere Metall-Verbindungen und/oder basische Stickstoff- oder Phosphorverbindungen.
Geeignete Metall-Verbindungen sind insbesondere Verbindungen von Zinn, Titan, Zirkonium, Aluminium oder Zink, insbesondere Diorganozinn(IV)-Verbindungen wie insbesondere Dibutylzinn(IV)-diacetat, Dibutylzinn(IV)-dilaurat, Dibutylzinn(IV)-dineodecanoat oder Dibutylzinn(IV)-bis(acetylacetonat) und Dioctylzinn(IV)-dilaurat, sowie Titan(IV)- oder Zirkonium(IV)- oder Aluminium(III)- oder Zink(II)-Komplexe mit insbesondere Alkoxy-, Carboxylat-, 1,3-Diketonat-, 1,3-Ketoesterat- oder 1,3-Ketoamidat-Liganden.
Als Organotitanat geeignet sind insbesondere Titan(IV)-Komplexverbindungen. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Geeignete basische Stickstoff- oder Phosphorverbindungen sind insbesondere Imidazole, Pyridine, Phosphazen-Basen oder bevorzugt Amine, Hexahydrotriazine, Biguanide, Guanidine oder Amidine.
Geeignete Amine sind insbesondere Alkyl-, Cycloalkyl- oder Aralkylamine; Amidgruppen-haltige Polyamine, sogenannte Polyamidoamine, wie sie im Handel erhältlich sind, beispielsweise unter den Markennamen Versamid® (von Cognis), Aradur® (von Huntsman), Euretek® (von Huntsman) oder Beckopox® (von Cytec); oder Aminosilane, wie insbesondere 3-Aminopropyltrimethoxysilan, 3-Aminopropyldimethoxymethylsilan, N-(2-Aminoethyl)-3-aminopropyltrimethoxysilan, N-(2-Aminoethyl)-3-aminopropylmethyldimethoxysilan, N-(2-Aminoethyl)-N'-[3-(trimethoxysilyl)propyl]ethylendiamin oder deren Analoga mit Ethoxy- anstelle der Methoxygruppen am Silicium.
Geeignete Hexahydrotriazine sind insbesondere 1,3,5-Hexahydrotriazin oder 1,3,5-Tris(3-(dimethylamino)propyl)-hexahydrotriazin.
Geeignete Biguanide sind insbesondere Biguanid, 1-Butylbiguanid, 1,1-Dimethylbiguanid, 1-Butylbiguanid, 1-Phenylbiguanid oder 1-(o-Tolyl)biguanid (OTBG).
Geeignete Guanidine sind insbesondere 1-Butylguanidin, 1,1-Dimethylguanidin, 1,3-Dimethylguanidin, 1,1,3,3-Tetramethylguanidin (TMG), 2-(3-(Trimethoxysilyl)propyl)-1,1,3,3-tetramethylguanidin, 2-(3-(Methyldimethoxysilyl)-propyl)-1,1,3,3-tetramethylguanidin, 2-(3-(Triethoxysilyl)propyl)-1,1,3,3-tetramethylguanidin, 1,5,7-Triazabicyclo[4.4.0]dec-5-en (TBD), 7-Methyl-1,5,7-triazabicyclo[4.4.0]dec-5-en, 7-Cyclohexyl-1,5,7-triazabicyclo[4.4.0]dec-5-en, 1-Phenylguanidin, 1-(o-Tolyl)guanidin (OTG), 1,3-Diphenylguanidin, 1,3-Di(o-tolyl)guanidin oder 2-Guanidinobenzimidazol.
Geeignete Amidine sind insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en, 6-Dibutylamino-1,8-diazabicyclo[5.4.0]undec-7-en, N,N'-Di-n-hexylacetamidin (DHA), 2-Methyl-1,4,5,6-tetrahydropyrimidin, 1,2-Dimethyl-1,4,5,6-tetrahydropyrimidin, 2,5,5-Trimethyl-1,4,5,6-tetrahydropyrimidin, N-(3-Trimethoxysilylpropyl)-4,5-dihydroimidazol oder N-(3-Triethoxysilylpropyl)-4,5-dihydroimidazol.

Weiterhin kann die Zusammensetzung als Co-Katalysator eine Säure enthalten, insbesondere eine Carbonsäure. Bevorzugt sind aliphatische Carbonsäuren wie Ameisensäure, Laurinsäure, Stearinsäure, Isostearinsäure, Ölsäure, 2-Ethyl-2,5-dimethylcapronsäure, 2-Ethylhexansäure, Neodecansäure, aromatische Carbonsäuren wie Salicylsäure, Fettsäuregemische aus der Verseifung von natürlichen Fetten und Ölen oder Di- und Polycarbonsäuren, insbesondere Poly(meth)acrylsäuren.

Die Zusammensetzung kann weitere Bestandteile enthalten, insbesondere die folgenden Hilfs- und Zusatzmittel:
- Haftvermittler und/oder Vernetzer, insbesondere Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-dimethoxymethylsilan, N-(2-Aminoethyl)-N'-[3-(trimethoxysilyl)propyl]ethylendiamin oder deren Analoga mit Ethoxy- anstelle von Methoxygruppen, weiterhin N-Phenyl-, N-Cyclohexyl- oder N-Alkylaminosilane, Mercaptosilane, Epoxysilane, (Meth)acrylosilane, Anhydridosilane, Carbamatosilane, Alkylsilane oder Iminosilane, oligomere Formen dieser Silane, Addukte aus primären Aminosilanen mit Epoxysilanen oder (Meth)acrylosilanen oder Anhydridosilanen, aminofunktionelle Alkylsilsesquioxane, insbesondere aminofunktionelles Methylsilsesquioxan oder aminofunktionelles Propylsilsesquioxan. Insbesondere geeignet sind 3-Aminopropyltrimethoxysilan, 3-Aminopropyltriethoxysilan, N-(2-Aminoethyl)-3-aminopropyltrimethoxysilan, N-(2-Aminoethyl)-3-aminopropyl-triethoxysilan, 3-Glycidoxypropyltrimethoxysilan, 3-Glycidoxypropyltriethoxysilan oder 3-Ureidopropyltrimethoxysilan, oder oligomere Formen dieser Silane;
- Trocknungsmittel, insbesondere Tetraethoxysilan, Vinyltrimethoxysilan, Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe, insbesondere Vinyltrimethoxysilan oder Vinyltriethoxysilan;
- Weichmacher, insbesondere Carbonsäureester wie Phthalate, insbesondere Dioctylphthalat, Bis(2-ethylhexyl)phthalat, Bis(3-propylheptyl)phthalat, Diisononylphthalat oder Diisodecylphthalat, Diester von ortho-Cyclohexandicarbonsäure, insbesondere Diisononyl-1,2-cyclohexandicarboxylat, Adipate, insbesondere Dioctyladipat, Bis(2-Ethylhexyl)adipat, Azelate, insbesondere Bis(2-ethylhexyl)acelat, Sebacate, insbesondere Bis(2-ethylhexyl)sebacat oder Diisononylsebacat, Polyole, insbesondere Polyoxyalkylenpolyole oder Polyesterpolyole, Glykolether, Glykolester, organische Phosphor- oder Sulfonsäureester, Sulfonsäureamide, Polybutene oder von natürlichen Fetten oder Ölen abgeleitete Fettsäuremethyl- oder -ethylester, auch "Biodiesel" genannt;
- Lösemittel;
- anorganische oder organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene;
- Stabilisatoren gegen Oxidation, Wärme, Licht oder UV-Strahlung;
- natürliche Harze, Fette oder Öle wie Kolophonium, Schellack, Leinöl, Rizinusöl oder Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO);
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in härtbaren Zusammensetzungen eingesetzte Substanzen. Es kann sinnvoll sein, gewisse Bestandteile vor dem Einmischen in die Zusammensetzung chemisch oder physikalisch zu trocknen.

In einer bevorzugten Ausführungsform enthält die Zusammensetzung mindestens ein Trocknungsmittel und mindestens einen Haftvermittler.

Die Zusammensetzung wird vorzugsweise unter Ausschluss von Feuchtigkeit hergestellt und aufbewahrt. Typischerweise ist sie in einer geeigneten Verpackung oder Anordnung, wie insbesondere einer Flasche, einer Büchse, einem Beutel, einem Eimer, einem Fass oder einer Kartusche, unter Ausschluss von Feuchtigkeit lagerstabil.

Die Zusammensetzung kann in Form einer einkomponentigen oder in Form einer mehrkomponentigen, insbesondere zweikomponentigen, Zusammensetzung vorliegen.
Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.
Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, gegebenenfalls unter Einwirkung von Feuchtigkeit.

Eine zweite oder gegebenenfalls weitere Komponenten wird bzw. werden mit der ersten Komponente vor oder bei der Applikation vermischt, insbesondere über einen Statikmischer oder über einen dynamischen Mischer.
Die Zusammensetzung wird insbesondere umgebungswarm, bevorzugt in einem Temperaturbereich zwischen 0 °C und 45 °C, insbesondere 5 °C bis 35 °C, appliziert und härtet auch bei diesen Bedingungen aus.
Bei der Applikation im Falle der der Verwendung von silanfunktionellen Polymeren **STP** beginnt die Vernetzungsreaktion der Silangruppen, gegebenenfalls unter Einfluss von Feuchtigkeit. Vorhandene Silangruppen können mit vorhandenen Silanolgruppen zu Siloxangruppen (Si-O-Si-Gruppen) kondensieren. Vorhandene Silangruppen können bei Kontakt mit Feuchtigkeit auch zu Silanolgruppen (Si-OH-Gruppen) hydrolysieren und durch nachfolgende Kondensationsreaktionen Siloxangruppen (Si-O-Si-Gruppen) bilden. Als Ergebnis dieser Reaktionen härtet die Zusammensetzung schliesslich aus. Falls für die Aushärtung Wasser benötigt wird, kann dieses entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation Wasser oder eine Wasser enthaltende Komponente zugesetzt werden, zum Beispiel in Form einer wasserhaltigen oder Wasser freisetzenden Flüssigkeit oder Paste. Eine Paste ist insbesondere geeignet für den Fall, dass die Zusammensetzung selber in Form einer Paste vorliegt.
Bei einer Aushärtung mittels Luftfeuchtigkeit härtet die Zusammensetzung von aussen nach innen durch, wobei zunächst eine Haut an der Oberfläche der Zusammensetzung gebildet wird. Die sogenannte Hautbildungszeit stellt ein Mass für die Aushärtungsgeschwindigkeit der Zusammensetzung dar. Die Geschwindigkeit der Aushärtung wird dabei im Allgemeinen von verschiedenen Faktoren, wie beispielsweise der Verfügbarkeit von Wasser, der Temperatur usw., bestimmt.

Die Zusammensetzung eignet sich für eine Vielzahl von Anwendungen, insbesondere als Harz zur Herstellung von Faserverbundwerkstoff (Composite), als Hartschaum, Weichschaum, Formteil, Elastomer, Faser, Folie oder Membran, als Vergussmasse, Dichtstoff, Klebstoff, Belag, Beschichtung oder Anstrich für Bau- und Industrieanwendungen, beispielsweise als Nahtabdichtung, Hohlraumversiegelung, Elektroisolationsmasse, Spachtelmasse, Fugendichtstoff, Schweiss- oder Bördelnahtdichtstoff, Montageklebstoff, Karrosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag, Bodenbeschichtung, Balkonbeschichtung, Dachbeschichtung, Betonschutzbeschichtung, Parkhausbeschichtung, Versiegelung, Rohrbeschichtung, Korrosionsschutzbeschichtung, Textilbeschichtung, Dämpfungselement, Dichtungselement oder Spachtelmasse.
Besonders geeignet ist die Zusammensetzung als Klebstoff und/oder Dichtstoff, insbesondere für die Fugenabdichtung und für elastische Klebeverbindungen in Bau- und Industrieanwendungen, sowie als elastische Beschichtung mit rissüberbrückenden Eigenschaften, insbesondere zum Schützen und/oder Abdichten von beispielsweise Dächern, Böden, Balkonen, Parkdecks oder Betonröhren, sowie als Kleb- und/oder Dichtstoff in der Herstellung, Reparatur und Ausrüstung von Transportmitteln, wie beispielsweise Schienentransportmitteln, Strassentransportmitteln, Luftfahrzeugen und Schiffen.
Bevorzugt stellt die Zusammensetzung somit einen Klebstoff oder einen Dichtstoff oder eine Beschichtung dar.

Eine solche Zusammensetzung enthält typischerweise Weichmacher, Füllstoffe, Haftvermittler und/oder Vernetzer und Trocknungsmittel und gegebenenfalls weitere Hilfs- und Zusatzstoffe.
Für eine Anwendung als Klebstoff oder Dichtstoff weist die Zusammensetzung bevorzugt eine pastöse Konsistenz mit strukturviskosen Eigenschaften auf. Ein solcher pastöser Dichtstoff oder Klebstoff wird insbesondere aus handelsüblichen Kartuschen, welche manuell, mittels Druckluft oder Batterie betrieben werden, oder aus einem Fass oder Hobbock mittels einer Förderpumpe oder eines Extruders, gegebenenfalls mittels eines Applikationsroboters, auf ein Substrat aufgetragen.
Für eine Anwendung als Beschichtung weist die Zusammensetzung bevorzugt eine bei Raumtemperatur flüssige Konsistenz mit selbstverlaufenden Eigenschaften auf. Gegebenenfalls ist sie leicht thixotrop, so dass die Beschichtung an abschüssigen bis senkrechten Flächen applizierbar ist, ohne sofort wegzufliessen. Sie wird insbesondere appliziert mittels Rolle oder Pinsel oder durch Ausgiessen und Verteilen mittels beispielsweise einem Roller, einem Schaber oder einer Zahntraufel.

Bei der Applikation wird die Zusammensetzung bevorzugt auf mindestens ein Substrat appliziert.
Geeignete Substrate sind insbesondere
- Glas, Glaskeramik, Beton, Mörtel, Backstein, Ziegel, Gips oder Natursteine wie Kalkstein, Granit oder Marmor;
- Metalle und Legierungen, wie Aluminium, Eisen, Stahl oder Buntmetalle, sowie oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Epoxidharze, Polyurethane (PUR), Polyoxymethylen (POM), Polyolefine (PO), Polyethylen (PE) oder Polypropylen (PP), Ethylen/Propylen-Copolymere (EPM) oder Ethylen/Propylen/Dien-Terpolymere (EPDM), oder faserverstärkte Kunststoffe wie Kohlefaserverstärkte Kunststoffe (CFK), Glasfaser-verstärkte Kunststoffe (GFK) oder Sheet Moulding Compounds (SMC), wobei die Kunststoffe bevorzugt mittels Plasma, Corona oder Flammen oberflächenbehandelt sein können;
- beschichtete Substrate, wie pulverbeschichtete Metalle oder Legierungen;
- Farben oder Lacke, insbesondere Automobildecklacke.
   Die Substrate können bei Bedarf vor dem Applizieren der Zusammensetzung vorbehandelt werden, insbesondere durch physikalische und/oder chemische Reinigungsverfahren oder durch das Aufbringen eines Haftvermittlers, einer Haftvermittlerlösung oder eines Primers.

Verklebt oder abgedichtet werden können zwei gleichartige oder zwei verschiedene Substrate, insbesondere die vorgängig genannten Substrate.

Nach der Aushärtung der Zusammensetzung mit Wasser, insbesondere in Form von Luftfeuchtigkeit, wird eine ausgehärtete Zusammensetzung erhalten.

Aus der Anwendung der Zusammensetzung entsteht ein Artikel, welcher mit der Zusammensetzung insbesondere verklebt, abgedichtet oder beschichtet wurde. Beim Artikel handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter; oder der Artikel kann ein Anbauteil davon sein.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet.
Die **Shore A-Härte** wurde bestimmt nach DIN 53505, gemessen nach 7 oder 14 Tagen Normklima ("NK"; 23 °C, 50% relative Luftfeuchtigkeit) an scheibenförmigen Prüfkörpern mit einem Durchmesser (Kreis) von 42 mm und einer Dicke (Höhe) von 6 mm. In einigen Versuchen wurde die Messung nach Lagerung in einem Ofen bei einer bestimmten Temperatur wiederholt. Die Angaben zu Temperatur und Verweilzeit im Ofen sind in den jeweiligen Tabellen gegeben.
Die **Hautbildungszeit** (HBZ) wurde dadurch bestimmt, dass einige Gramm der Zusammensetzung in einer Schichtdicke von ca. 2 mm auf Pappkarton aufgetragen wurden und im Normklima die Zeitdauer gemessen wurde, bis beim leichten Antippen der Oberfläche der Zusammensetzung mittels einer Pipette aus LDPE erstmals keine Rückstände auf der Pipette mehr zurückblieben.
Die mechanischen Eigenschaften **Zugfestigkeit, Bruchdehnung** und **E-Modul** (bei 0-5% Dehnung) wurden gemäss DIN EN 53504 bei einer Zuggeschwindigkeit von 200 mm/min. gemessen.
Die **Zugscherfestigkeit** wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 12x25 mm; Schichtdicke: 4.0 mm; Messgeschwindigkeit: 20 mm/min; Substrate: Floatglas, PVC und Aluminium; Temperatur: 23°C (falls nicht anders genannt)).
Der **Weiterreisswiderstand** wurde bestimmt nach DIN 53515, an während 14 Tagen bei 23°C und 50% relativer Luftfeuchtigkeit ausgehärteten Filmen mit einer Schichtdicke von 2 mm.

### Herstellung der Polymere P

### Isocyanatgruppen aufweisendes Polyurethanpolymer PU-1

500 g Polyoxypropylen-Diol (Acclaim® 4200 N, Covestro; OH-Zahl 28.1 mg KOH/g), 2000 g Polyoxypropylenpolyoxyethylen-Triol (Caradol® MD34-02, Shell; OH-Zahl 35.0 mg KOH/g) und 245 g Toluylendiisocyanat (TDI; Desmodur® T 80 P, Covestro) wurden bei 80 °C zu einem NCO-terminierten Polyurethanpolymeren mit einem titrimetrisch bestimmten Gehalt an freien Isocyanat-Gruppen von 1.88 Gew.-% umgesetzt. Das Isocyanatgruppen aufweisende Polymer wurde auf Raumtemperatur abgekühlt und unter Ausschluss von Feuchtigkeit aufbewahrt.

### Silanfunktionelles Polymer STP-1

Unter Feuchtigkeitsausschluss wurden 1000 g Polyol Acclaim® 12200 (von Covestro; low monol Polyoxypropylendiol, OH-Zahl 11.0 mg KOH/g, Wassergehalt ca. 0.02 Gew.-%), 35.2 g Isophorondiisocyanat (Vestanat® IPDI von Evonik Industries), 122.5 g 1,2-Cyclohexandicarbonsäure-diisononylester (Hexamoll® DINCH® von BASF) und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.39 Gew.-% erreicht hatte. Anschliessend wurden 36.9 g N-(3-Trimethoxysilylpropyl)amino-bernsteinsäurediethylester (Addukt aus 3-Aminopropyltrimethoxysilan und Maleinsäurediethylester; hergestellt nach den Angaben in US 5,364,955) eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

### Silanfunktionelles Polymer STP-2

Unter Feuchtigkeitsausschluss wurden 1000 g Polyol Acclaim® 12200 (von Covestro; low monol Polyoxypropylendiol, OH-Zahl 11.0 mg KOH/g, Wassergehalt ca. 0.02 Gew.-%), 43.6 g Isophorondiisocyanat (Vestanat® IPDI von Evonik Industries), 126.4 g Triethylenglycol bis(2-ethylhexanoat) (Solusolv® 2075 von Eastman Chem.) und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilylpropyl)amino-bernsteinsäurediethylester (Addukt aus 3-Aminopropyltrimethoxysilan und Maleinsäurediethylester; hergestellt nach den Angaben in US 5,364,955) eingemischt und die Mischung bei 90°C solange gerührt, bis mittels FT-IR-Spektroskopie kein freies Isocyanat mehr nachgewiesen wurde. Das silanfunktionelle Polymer wurde auf Raumtemperatur abgekühlt und unter Ausschluss von Feuchtigkeit aufbewahrt.

### Herstellung der latenten Härter

### Aldimin 1

(N,N'-Bis(2,2-dimethyl-3-lauroyloxypropyliden)-3-aminomethyl-3,5,5-trimethylcyclohexylamin)
50.00 g 2,2-Dimethyl-3-lauroyloxypropanal wurden in einem Rundkolben unter Stickstoffatmosphäre vorgelegt. Unter Rühren wurden 13.93 g 3-Aminomethyl-3,5,5-trimethylcyclohexylamin zugegeben und
anschliessend die flüchtigen Bestandteile bei 80 °C und 10 mbar Vakuum entfernt. Es wurde eine blassgelbe Flüssigkeit mit einer Aminzahl von 153.0 mg KOH/g erhalten.

### Herstellung der feuchtigkeitshärtenden Zusammensetzungen

Vergleichsbeispiele sind in den Tabellen 2 bis 4 mit "(Ref.)" gekennzeichnet. Die verwendeten Rohstoffe werden in Tabelle 1 beschrieben.

### Verwendete Rohstoffe

**Tabelle 1: Verwendete Rohstoffe in den Beispielformulierungen.**

| Rohstoff | Hersteller / Beschreibung |
|---|---|
| Disflamoll TOF | Tris-(2-Ethylhexyl)-phosphat (Disflamoll® TOF; Lanxess) |
| Kreide 1 (getrocknet) | gemahlenes Calciumcarbonat (Omyacarb® 5-GU; Omya) |
| Russ (getrocknet) | Carbon black (Monarch® 570; Cabot) |
| ATH 1 (getrocknet) | Gemahlenes, unbeschichtetes ATH (Micral® AM500, Huber) |
| ATH 2 (getrocknet) | Gefälltes, Vinylsilan-beschichtetes ATH (Martinal® OL 104 ZO, Martinswerk) |
| ATH 3 (getrocknet) | Gemahlenes, unbeschichtetes ATH (SB 632, Huber) |
| ATH 4 (getrocknet) | Gemahlenes, unbeschichtetes ATH (MoldX® P18; Huber) |
| ATH 5 (getrocknet) | Gefälltes, unbeschichtetes ATH (Martinal® OL 104 LEO, Martinswerk) |
| ATH 6 (getrocknet) | Gefälltes, Fettsäure-beschichtetes ATH (Martinal® OL 104 C, Martinswerk) |
| ATH 7 (getrocknet) | Gemahlenes, unbeschichtetes ATH (MoldX® P18; Huber) |
| ATH 8 (getrocknet) | Gefälltes, unbeschichtetes ATH (Hymod® M6400, Huber) |
| Titandioxid | Kronos® 2500; Kronos |
| Phosphat | Ammoniumpolyphosphat (JLS-APP; JLS) |
| Blähgraphit | Nyagraph® 250; Nyacol Nano Technologies |
| Rheologiemittel | Thixatrol® ST; Elementis |
| Katalysator 1 | 4 Gew.-% Dibutylzinndilaurat in Hexamoll DINCH |
| Katalysator 2 | 5 Gew.-% Salicylsäure in Disflamoll TOF |
| Trocknungsmittel | Vinyltrimethoxysilan (Silquest® A-171; Momentive) |
| Haftverm ittler | N-(2-Aminoethyl)-(3-aminopropyl)trimethoxysilan (Silquest® A-1110; Momentive) |

### Herstellung der Polyurethan-Zusammensetzungen Z-1 bis Z-5

In einem Vakuummischer wurde jeweils das Polyurethanpolymer **PU-1** zusammen mit dem Weichmacher und dem **Aldimin-1** unter Stickstoff vorgelegt, der Füllstoff (Kreide, Russ, und/oder ATH) zugegeben und eingemischt. Daraufhin wurde der Katalysator zugegeben und während 20 min bei 1000-1200 Umdrehungen unter Vakuum eingemischt, wobei eine homogene Paste erhalten wurde. Diese wurde dann in luftdichte Kartuschen abgefüllt und später verwendet, um die Prüfkörper herzustellen. Die genauen Mengenangaben (in Gew.-%, bezogen auf die gesamte jeweilige Zusammensetzung) der einzelnen Rohstoffe für die jeweiligen Versuche sind in Tabelle 2 dargestellt.

**Tabelle 2: Zusammensetzungen Z-1 bis Z-5 in Gew.-%, jeweils bezogen auf die gesamte Zusammensetzung.**

| | **Z-1** | **Z-2** (Ref.) | **Z-3** | **Z-4** | **Z-5** (Ref.) |
|---|---|---|---|---|---|
| Polymer PU-1 | 25 | 25 | 25 | 25 | 25 |
| Disflamoll TOF | 12 | 12 | 12 | 12 | 12 |
| Aldimin-1 | 2 | 2 | 2 | 2 | 2 |
| Kreide 1 (getrocknet) | | | | | 60 |
| Russ (getrocknet) | | | 5 | 10 | |
| ATH 1 (getrocknet) | | 60 | | | |
| ATH 2 (getrocknet) | 60 | | 55 | 50 | |
| Katalysator 1 | 0.5 | 0.5 | 0.5 | 0.5 | 0.5 |
| Katalysator 2 | 0.5 | 0.5 | 0.5 | 0.5 | 0.5 |
| TOTAL | 100 | 100 | 100 | 100 | 100 |

### Herstellung der STP-Zusammensetzungen Z-6 bis Z-17

In einem Vakuummischer wurden entsprechend den in der Tabellen 3 bis 5 angegebenen Gewichtsteilen das silanfunktionelle Polymer **STP-1** bzw. **STP-2,** Weichmacher und Trocknungsmittel während 5 Minuten gut vermischt. Anschliessend wurde der jeweilige Füllstoff (sowie die nicht in allen Formulierungen verwendeten Rohstoffe Titandioxid, Rheologiemittel, Blähgraphit und Phosphat) während 15 Minuten bei 60°C eingeknetet. Bei ausgeschalteter Heizung wurden anschliessend Haftvermittler und Katalysator beigefügt und die Mischung unter Vakuum während 10 Minuten zu einer homogenen Paste verarbeitet. Diese wurde dann in innenlackierte Aluminium-Spreizkolbenkartuschen abgefüllt und nach Lagerung für die Prüfkörper weiterverwendet. Die genauen Mengenangaben (in Gew.-%, bezogen auf die gesamte jeweilige Zusammensetzung) der einzelnen Rohstoffe für die jeweiligen Versuche sind in Tabellen 3 bis 5 dargestellt.

**Tabelle 3: Zusammensetzungen Z-6 bis Z-9 in Gew.-%, jeweils bezogen auf die gesamte Zusammensetzung.**

| | **Z-6** | **Z-7** | **Z-8** | **Z-9** (Ref.) |
|---|---|---|---|---|
| Polymer STP-2 | 25 | 25 | 25 | 25 |
| Disflamoll TOF | 11.5 | 11.5 | 11.5 | 11.5 |
| Trocknungsmittel | 1.5 | 1.5 | 1.5 | 1.5 |
| Russ (getrocknet) | | 5 | 10 | |
| ATH 3 (getrocknet) | | | | 60 |
| ATH 2 (getrocknet) | 60 | 55 | 50 | |
| Haftverm ittler | 1 | 1 | 1 | 1 |
| Katalysator 1 | 1 | 1 | 1 | 1 |
| TOTAL | 100 | 100 | 100 | 100 |

**Tabelle 4: Zusammensetzungen Z-10 bis Z-13 in Gew.-%, jeweils bezogen auf die gesamte Zusammensetzung.**

| | **Z-10** (Ref.) | **Z-11** (Ref.) | **Z-12** | **Z-13** |
|---|---|---|---|---|
| Polymer STP-1 | 24 | 24 | 24 | 24 |
| Disflamoll TOF | 15 | 15 | 15 | 15 |
| Trocknungsmittel | 2 | 2 | 2 | 2 |
| Titandioxid | 2 | 2 | 2 | 2 |
| Rheologiemittel | 3 | 3 | 3 | 3 |
| ATH 4 (getrocknet) | 51.7 | | | |
| ATH 5 (getrocknet) | | 51.7 | | |
| ATH 6 (getrocknet) | | | 51.7 | |
| ATH 2 (getrocknet) | | | | 51.7 |
| Haftverm ittler | 1 | 1 | 1 | 1 |
| Katalysator 1 | 1.3 | 1.3 | 1.3 | 1.3 |
| TOTAL | 100 | 100 | 100 | 100 |

**Tabelle 5: Zusammensetzungen Z-14 bis Z-19 in Gew.-%, jeweils bezogen auf die gesamte Zusammensetzung.**

| | **Z-14** (Ref.) | **Z-15** (Ref.) | **Z-16** (Ref.) | **Z-17** | **Z-18** | **Z-19** |
|---|---|---|---|---|---|---|
| Polymer STP-2 | 24 | 24 | 24 | 20 | 20 | 20 |
| Disflamoll TOF | 15 | 15 | 15 | 16.5 | 16.5 | 16.5 |
| Trocknungsmittel | 2 | 2 | 2 | 2 | 2 | 2 |
| Titandioxid | 2 | 2 | 2 | 2 | 2 | 2 |
| Rheologiemittel | 3 | 3 | 3 | | | |
| Phosphat | | | | 8 | 8 | 10 |
| Blähgraphit | | | | 4 | 6 | 4 |
| ATH 7 (getrocknet) | 51.7 | | | | | |
| ATH 4 (getrocknet) | | 51.7 | | | | |
| ATH 8 (getrocknet) | | | 51.7 | | | |
| ATH 2 (getrocknet) | | | | 45 | 43 | 43 |
| Haftverm ittler | 1 | 1 | 1 | 1 | 1 | 1 |
| Katalysator 1 | 1.3 | 1.3 | 1.3 | 1.5 | 1.5 | 1.5 |
| TOTAL | 100 | 100 | 100 | 100 | 100 | 100 |

### Messergebnisse

Die Messresultate gemäss den oben beschriebenen Methoden sind in den Tabellen 6 bis 9 dargestellt.

**Tabelle 6: Testresultate der Zusammensetzungen Z-1 bis Z-5. Ein Shore A-Härte Wert von 0 bedeutet, dass die Probe durch die Hitze zerstört war.**

| | **Z-1** | **Z-2** (Ref.) | **Z-3** | **Z-4** | **Z-5** (Ref.) |
|---|---|---|---|---|---|
| Zugfestigkeit [MPa] | 2.4 | 0.8 | 3.3 | 4.3 | 1.15 |
| Bruchdehnung [%] | 545 | 914 | 316 | 257 | 352 |
| Zugscherfestigkeit [MPa] | 1.82 | 0.81 | 2.96 | 3.48 | 0.87 |
| E-Modul (0-5%) [MPa] | 1.5 | 0.5 | 1.8 | 2.5 | 1.6 |
| Shore A (7d RT) | 41 | 23 | 49 | 45 | 39.1 |
| Shore A (7d RT) + 1h 120°C | 38.3 | 11.4 | 42.7 | 45.5 | 27.2 |
| Shore A (7d RT) + 4h 120°C | 31.8 | 0 | 37.9 | 44.7 | 0 |
| Shore A (7d RT) + 8h 120°C | 26.7 | 0 | 34.5 | 42 | 0 |
| Shore A (7d RT) + 1h 140°C | 25.4 | 0 | 33.6 | 37.6 | 38.8 |
| Shore A (7d RT) + 4h 140°C | 9.5 | 0 | 20.5 | 30 | 0 |
| Shore A (7d RT) + 8h 140°C | 0 | 0 | 14.7 | 27.5 | 0 |

**Tabelle 7: Testresultate der Zusammensetzungen Z-6 bis Z-9.**

| | **Z-6** | **Z-7** | **Z-8** | **Z-9** (Ref.) |
|---|---|---|---|---|
| Zugfestigkeit [MPa] | 2.65 | 3.86 | 3.51 | 2.58 |
| Bruchdehnung [%] | 114 | 123 | 88 | 87 |
| Zugscherfestigkeit [MPa] | 1.48 | 2.37 | 2.53 | 1.38 |
| E-Modul (0-5%) [MPa] | 2.3 | 4.2 | 7.7 | 2.9 |
| Shore A (14d RT) | 52 | 63 | 72 | 57 |
| Shore A (14d RT) + 2h 120°C | 50 | 60.3 | 69.2 | 54.2 |
| Shore A (14d RT) + 4h 120°C | 49.7 | 61.5 | 70 | 54.5 |
| Shore A (14d RT) + 6h 120°C | 48.7 | 60.7 | 71.3 | 55 |
| Shore A (14d RT) + 8h 120°C | 47.3 | 61.3 | 70 | 53 |

**Tabelle 8: Testresultate der Zusammensetzungen Z-10 bis Z-13.**

| | **Z-10** (Ref.) | **Z-11** (Ref.) | **Z-12** | **Z-13** |
|---|---|---|---|---|
| Zugfestigkeit [MPa] | 1.7 | 2.4 | 1.6 | 1.6 |
| Bruchdehnung [%] | 260 | 350 | 600 | 560 |
| Weiterreisswiderstand [N/mm] | 4.0 | 5.2 | 12.0 | 9.0 |
| E-Modul (0-5%) [MPa] | 0.7 | 0.7 | 1.7 | 1.3 |
| Shore A (14d RT) | 26 | 30 | 33 | 31 |
| Hautbildungszeit (min) | 35 | 45 | 50 | 50 |

**Tabelle 9: Testresultate der Zusammensetzungen Z-14 bis Z-19. "n/m" bedeutet, dass dieser Wert nicht gemessen wurde.**

| | **Z-14** (Ref.) | **Z-15** (Ref.) | **Z-16** (Ref.) | **Z-17** | **Z-18** | **Z-19** |
|---|---|---|---|---|---|---|
| Zugfestigkeit [MPa] | 3 | 2.9 | 3 | 1.8 | 1.5 | 1.5 |
| Bruchdehnung [%] | 120 | 140 | 180 | 101 | 93 | 93 |
| Weiterreisswiderstand [N/mm] | 3.2 | 3.4 | 4.0 | 3.5 | 3.5 | 3.3 |
| E-Modul (0-5%) [MPa] | 2.5 | 2.3 | 2.4 | 2.2 | 2.3 | 1.9 |
| Shore A (14d RT) | 50 | 50 | 50 | n/m | n/m | n/m |
| Hautbildungszeit (min) | 50 | 60 | 50 | 18 | 16 | 14 |
| SBI Test (DIN EN 13501-1) | C (s2, d0) | n/m | n/m | B (s2, d0) | B (s1, d0) | B (s1, d0) |

Die Messergebnisse in den Tabellen 6 bis 9 zeigen deutlich, dass die erfindungsgemässen Zusammensetzungen den nicht erfindungsgemässen Beispielen bezüglich Hitzestabilität, Brandeigenschaften und Mechanik überlegen sind. Dies zeigt, dass unabhängig davon ob ein silanfunktionelles Polymer **STP** oder ein Isocyanatgruppen aufweisendes Polyurethanpolymer **PU** verwendet wird, diese Eigenschaften nur durch Verwendung eines gefällten, oberflächenbeschichteten Aluminiumtrihydrats **ATH** erreicht wird. Durch den Einsatz von Russ oder Blähton können darüberhinaus noch weitere, verbesserte Eigenschaften erreicht werden.

## Patentansprüche

1. Feuchtigkeitshärtende Zusammensetzung, umfassend
a) mindestens ein feuchtigkeitsreaktives Polymer **P** mit einem Anteil von 10 bis 50 Gew.-%, bezogen auf die gesamte Zusammensetzung,
b) mindestens ein gefälltes, oberflächenbeschichtetes Aluminiumtrihydrat **ATH,** mit einem Anteil von 30 bis 60 Gew.-%, bezogen auf die gesamte Zusammensetzung,
c) zwischen 5 und 25 Gew.-%, bezogen auf die gesamte Zusammensetzung, mindestens einer phosphorhaltigen Verbindung **PH,**
d) zwischen 0 und 20 Gew.-%, bezogen auf die gesamte Zusammensetzung, mindestens eines Kohlenstoffadditivs **KO,** wobei das Kohlenstoffadditiv **KO** ausgewählt ist aus der Gruppe bestehend aus Russen, insbesondere getrocknete Russen, sowie Blähgraphiten, welche eine intumeszierende Wirkung haben,
**dadurch gekennzeichnet, dass** die phosphorhaltige Verbindung **PH** ausgewählt ist aus der Gruppe aromatische oder aliphatische Alkylphosphate, Ammoniumphosphat, Ammoniumpolyphosphat, roter Phosphor und Phosphorsäure.

2. Feuchtigkeitshärtende Zusammensetzung gemäss Anspruch 1, **dadurch gekennzeichnet, dass** das gefällte, oberflächenbeschichtete Aluminiumtrihydrat **ATH** eine Oberflächenbeschichtung aus Vinylsilanen oder Fettsäuren umfasst.

3. Feuchtigkeitshärtende Zusammensetzung gemäss einem der Ansprüche 1 oder 2, **dadurch gekennzeichnet, dass** das feuchtigkeitsreaktive Polymer **P** mindestens ein Polyurethanpolymer **PU** mit freien oder latenten Isocyanatgruppen umfasst oder die Zusammensetzung zusätzlich einen latenten Härter umfasst.

4. Feuchtigkeitshärtende Zusammensetzung gemäss einem der Ansprüche 1 oder 2, **dadurch gekennzeichnet, dass** das feuchtigkeitsreaktive Polymer **P** mindestens ein silanfunktionelles Polymer **STP** umfasst.

5. Feuchtigkeitshärtende Zusammensetzung gemäss Anspruch 4, **dadurch gekennzeichnet dass** das silanfunktionelle Polymer **STP** Endgruppen der Formel (II) aufweist, 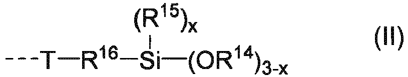 wobei
R¹⁴ für einen linearen oder verzweigten, einwertigen Kohlenwasserstoffrest mit 1 bis 5 C-Atomen steht;
R¹⁵ für einen linearen oder verzweigten, einwertigen Kohlenwasserstoffrest mit 1 bis 8 C-Atomen steht;
x für einen Wert von 0 oder 1 oder 2 steht;
R¹⁶ für einen linearen oder verzweigten, zweiwertigen Kohlenwasserstoffrest mit 1 bis 12 C-Atomen, welcher gegebenenfalls cyclische und/oder aromatische Anteile und gegebenenfalls ein oder mehrere Heteroatome, insbesondere ein oder mehrere Stickstoffatome, aufweist, steht; und
T für einen zweiwertigen Rest ausgewählt aus -O-, -S-, -N(R¹⁷)-, -O-CO-N(R¹⁷)-, -N(R¹⁷)-CO-O- und -N(R¹⁷)-CO-N(R¹⁷)- steht, wobei R¹⁷ für einen Wasserstoff-Rest oder für einen linearen oder verzweigten Kohlenwasserstoff-Rest mit 1 bis 20 C-Atomen, welcher gegebenenfalls cyclische Anteile aufweist, und welcher gegebenenfalls eine Alkoxysilan-, Ether- oder Carbonsäureester-Gruppe aufweist, steht.

6. Feuchtigkeitshärtende Zusammensetzung gemäss einem der Ansprüche 3 bis 5, **dadurch gekennzeichnet, dass** das Kohlenstoffadditiv **KO** mindestens einen getrockneten Russ umfasst, mit einem Anteil von zwischen 1 und 15 Gew.-%, bevorzugt zwischen 3 und 10 Gew.-%, bezogen auf die gesamte Zusammensetzung.

7. Feuchtigkeitshärtende Zusammensetzung gemäss einem der Ansprüche 3 bis 5, **dadurch gekennzeichnet, dass** das Kohlenstoffadditiv **KO** mindestens einen Blähgraphit umfasst, mit einem Anteil von zwischen 1 und 15 Gew.-%, bevorzugt zwischen 4 und 11 Gew.-%, bezogen auf die gesamte Zusammensetzung.

8. Feuchtigkeitshärtende Zusammensetzung gemäss Anspruch 6, **dadurch gekennzeichnet, dass** die Zusammensetzung 4 bis 11 Gew.-% getrockneten Russ sowie 7 bis 15 Gew.-% phosphorhaltige Verbindung **PH** umfasst, immer bezüglich der gesamten Zusammensetzung, und die Zusammensetzung nach Aushärtung mindestens die Gefährdungsstufenklasse HL2 nach DIN EN 45545-2 erreicht.

9. Feuchtigkeitshärtende Zusammensetzung gemäss Anspruch 7, **dadurch gekennzeichnet, dass** die Zusammensetzung 3 bis 10 Gew.-% Blähgraphit sowie 10 bis 25 Gew.-% phosphorhaltige Verbindung **PH** umfasst, immer bezüglich der gesamten Zusammensetzung, und die Zusammensetzung nach Aushärtung die Brandschutzklasse B (s2, d0) nach DIN EN 13501-1 erreicht.

10. Verwendung eines gefällten, oberflächenbeschichteten Aluminiumtrihydrats **ATH** in Kombination mit einem getrockneten Russ und einer phosphorhaltigen Verbindung **PH** zur Herstellung einer feuchtigkeitshärtenden Zusammensetzung gemäss Anspruch 8, die nach Aushärtung mindestens die Gefährdungsstufenklasse HL2 nach DIN EN 45545-2 erreicht.

11. Verwendung eines gefällten, oberflächenbeschichteten Aluminiumtrihydrats **ATH** in Kombination mit einem Blähgraphit und einer phosphorhaltigen Verbindung **PH** zur Herstellung einer feuchtigkeitshärtenden Zusammensetzung gemäss Anspruch 9, die nach Aushärtung die Brandschutzklasse B (s2, d0) nach DIN EN 13501-1 erreicht.

12. Klebstoff, Dichtstoff oder Beschichtung, umfassend eine feuchtigkeitshärtende Zusammensetzung gemäss einem der Ansprüche 1 bis 9.

13. Bauwerk oder Fertigungsgegenstand, das oder der mit einem Klebstoff, Dichtstoff oder einer Beschichtung gemäss Anspruch 12 verklebt, abgedichtet oder beschichtet wurde.

14. Ausgehärtete Zusammensetzung nach einem der Ansprüche 1 bis 9.

## Claims

1. Moisture-curable composition, comprising
(a) at least one moisture-reactive polymer **P** in a proportion of 10% to 50% by weight based on the total composition,
(b) at least one precipitated surface-coated aluminium trihydrate **ATH** in a proportion of 30% to 60% by weight based on the total composition,
(c) between 5% and 25% based on the total composition of at least one phosphorus-containing compound **PH,**
(d) between 0% and 20% by weight based on the total composition of at least one carbon additive **KO,** wherein the carbon additive **KO** is selected from the group consisting of carbon blacks, in particular dried carbon blacks, and expandable graphites having an intumescent effect, **characterized in that** the phosphorus-containing compound **PH** is selected from the group of aromatic or aliphatic alkyl phosphates, ammonium phosphate, ammonium polyphosphate, red phosphorus and phosphoric acid.

2. Moisture-curable composition according to claim 1, **characterized in that** the precipitated, surface-coated aluminium trihydrate **ATH** comprises a surface coating composed of vinylsilanes or fatty acids.

3. Moisture-curable composition according to either of claims 1 or 2, **characterized in that** the moisture-reactive polymer **P** comprises at least one polyurethane polymer **PU** having free or latent isocyanate groups or the composition additionally comprises a latent hardener.

4. Moisture-curable composition according to either of claims 1 or 2, **characterized in that** the moisture-reactive polymer **P** comprises at least one silane-functional polymer **STP.**

5. Moisture-curable composition according to claim 4, **characterized in that** the silane-functional polymer **STP** comprises end groups of formula (II) 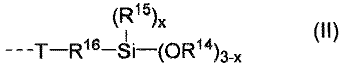 wherein
R¹⁴ represents a linear or branched, monovalent hydrocarbon radical having 1 to 5 carbon atoms;
R¹⁵ represents a linear or branched, monovalent hydrocarbon radical having 1 to 8 carbon atoms;
x represents a value of 0 or 1 or 2;
R¹⁶ represents a linear or branched, divalent hydrocarbon radical having 1 to 12 carbon atoms which optionally comprises cyclic and/or aromatic proportions and optionally one or more heteroatoms, in particular one or more nitrogen atoms; and
T represents a divalent radical selected from -O-, -S-, -N(R¹⁷)-, -O-CO-N(R¹⁷)-, -N(R¹⁷)-CO-O- and - N(R¹⁷)-CO-N(R¹⁷)-, wherein R¹⁷ represents a hydrogen radical or a linear or branched hydrocarbon radical having 1 to 20 carbon atoms which optionally comprises cyclic proportions and which optionally comprises an alkoxysilane, ether or carboxylic ester group.

6. Moisture-curable composition according to any of claims 3 to 5, **characterized in that** the carbon additive **KO** comprises at least one dried carbon black in a proportion of between 1% and 15% by weight, preferably between 3% and 10% by weight, based on the total composition.

7. Moisture-curable composition according to any of claims 3 to 5, **characterized in that** the carbon additive **KO** comprises at least one expandable graphite in a proportion of between 1% and 15% by weight, preferably between 4% and 11% by weight, based on the total composition.

8. Moisture-curable composition according to claim 6, **characterized in that** the composition comprises 4% to 11% by weight of dried carbon black and 7% to 15% by weight of phosphorus-containing compound **PH** in each case based on the total composition and after curing the composition achieves at least hazard level class HL2 according to DIN EN 45545-2.

9. Moisture-curable composition according to claim 7, **characterized in that** the composition comprises 3% to 10% by weight of expandable graphite and 10% to 25% by weight of phosphorus-containing compound **PH** in each case based on the total composition and after curing the composition achieves fire safety classification B (s2, d0) according to DIN EN 13501-1.

10. Use of a precipitated, surface-coated aluminium trihydrate **ATH** in combination with a dried carbon black and a phosphorus-containing compound **PH** for producing a moisture-curable composition according to claim 8 which after curing achieves at least hazard level class HL2 according to DIN EN 45545-2.

11. Use of a precipitated, surface-coated aluminium trihydrate **ATH** in combination with an expandable graphite and a phosphorus-containing compound **PH** for producing a moisture-curable composition according to claim 9 which after curing achieves fire safety classification B (s2, d0) according to DIN EN 13501-1.

12. Adhesive, sealant or coating comprising a moisture-curable composition according to any of claims 1 to 9.

13. Built structure or manufactured article bonded, sealed or coated with an adhesive, sealant or coating according to claim 12.

14. Cured composition according to any of claims 1 to 9.

## Revendications

1. Composition durcissant à l'humidité, comprenant
a) au moins un polymère **P** réactif à l'humidité en une proportion de 10 à 50 % en poids, par rapport à la composition totale,
b) au moins un trihydrate d'aluminium **ATH** précipité, revêtu en surface, en une proportion de 30 à 60 % en poids, par rapport à la composition totale,
c) entre 5 et 25 % en poids, par rapport à la composition totale, d'au moins un composé **PH** contenant du phosphore,
d) entre 0 et 20 % en poids, par rapport à la composition totale, d'au moins un additif de carbone **KO,** l'additif de carbone **KO** étant choisi parmi des suies, en particulier des suies séchées, ainsi que des graphites expansés, qui possèdent un effet intumescent,
**caractérisée en ce que** le composé **PH** contenant du phosphore est choisi dans le groupe des alkylphosphates aromatiques ou aliphatiques, le phosphate d'ammonium, le polyphosphate d'ammonium, le phosphore rouge et l'acide phosphorique.

2. Composition durcissant à l'humidité selon la revendication 1, **caractérisée en ce que** le trihydrate d'aluminium **ATH** précipité, revêtu en surface comprend un revêtement de surface composé de vinylsilanes ou d'acides gras.

3. Composition durcissant à l'humidité selon l'une quelconque des revendications 1 et 2, **caractérisée en ce que** le polymère **P** réactif à l'humidité comprend au moins un polymère de type polyuréthane **PU** comportant des groupes isocyanate libres ou latents ou la composition comprenant de plus un agent de durcissement latent.

4. Composition durcissant à l'humidité selon l'une quelconque des revendications 1 et 2, **caractérisée en ce que** le polymère **P** réactif à l'humidité comprend au moins un polymère **STP** fonctionnalisé par un silane.

5. Composition durcissant à l'humidité selon la revendication 4, **caractérisée en ce que** le polymère **STP** fonctionnalisé par un silane présente des groupes terminaux de formule (II) 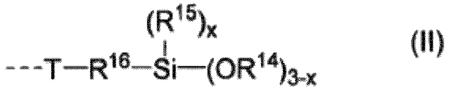
R¹⁴ représentant un radical hydrocarboné monovalent, linéaire ou ramifié, comportant 1 à 5 atomes de C ;
R¹⁵ représentant un radical hydrocarboné monovalent, linéaire ou ramifié, comportant 1 à 8 atomes de C ;
x représentant une valeur de 0 ou 1 ou 2 ;
R¹⁶ représentant un radical hydrocarboné divalent, linéaire ou ramifié, comportant 1 à 12 atomes de C, qui présente éventuellement des parties cycliques et/ou aromatiques et éventuellement un ou plusieurs hétéroatomes, en particulier un ou plusieurs atomes d'azote ; et
T représentant un radical divalent choisi parmi -O-, -S-, -N(R¹⁷)-, -O-CO-N(R¹⁷)-, -N(R¹⁷)-CO-O- et-N(R¹⁷)-CO-N(R¹⁷)-, R¹⁷ représentant un radical hydrogène ou un radical hydrocarboné, linéaire ou ramifié, comportant 1 à 20 atomes de C, qui présente éventuellement des parties cycliques, et qui présente éventuellement un groupe alcoxysilane, éther ou ester d'acide carboxylique.

6. Composition durcissant à l'humidité selon l'une quelconque des revendications 3 à 5, **caractérisée en ce que** l'additif de carbone **KO** comprend au moins une suie séchée, en une proportion comprise entre 1 et 15 % en poids, préférablement entre 3 et 10 % poids, par rapport à la composition totale.

7. Composition durcissant à l'humidité selon l'une quelconque des revendications 3 à 5, **caractérisée en ce que** l'additif de carbone **KO** comprend au moins un graphite expansé, en une proportion comprise entre 1 et 15 % en poids, préférablement entre 4 et 11 % poids, par rapport à la composition totale.

8. Composition durcissant à l'humidité selon la revendication 6, **caractérisée en ce que** la composition comprend 4 à 11 % en poids de suie séchée ainsi que 7 à 15 % en poids d'un composé **PH** contenant du phosphore, toujours par rapport à la composition totale, et la composition atteint après durcissement au moins la classe de risque HL2 selon la norme DIN EN 45545-2.

9. Composition durcissant à l'humidité selon la revendication 7, **caractérisée en ce que** la composition comprend 3 à 10 % en poids de graphite expansé ainsi que 10 à 25 % en poids d'un composé **PH** contenant du phosphore, toujours par rapport à la composition totale, et la composition atteint après durcissement la classe de protection incendie B (s2, d0) selon la norme DIN EN 13501-1.

10. Utilisation d'un trihydrate d'aluminium **ATH** précipité, revêtu en surface en combinaison avec une suie séchée et un composé **PH** contenant du phosphore pour la préparation d'une composition durcissant à l'humidité selon la revendication 8, qui atteint après durcissement au moins la classe de risque HL2 selon la norme DIN EN 45545-2.

11. Utilisation d'un trihydrate d'aluminium **ATH** précipité, revêtu en surface en combinaison avec un graphite expansé et un composé **PH** contenant du phosphore pour la préparation d'une composition durcissant à l'humidité selon la revendication 9, qui atteint après durcissement la classe de protection incendie B (s2, d0) selon la norme DIN EN 13501-1.

12. Adhésif, agent d'étanchéité ou revêtement, comprenant une composition durcissant à l'humidité selon l'une quelconque des revendications 1 à 9.

13. Ouvrage ou article fabriqué, qui a été collé, étanchéifié ou revêtu avec un adhésif, un agent d'étanchéité ou un revêtement selon la revendication 12.

14. Composition durcie selon l'une quelconque des revendications 1 à 9.
